# EUROPÄISCHE PATENTANMELDUNG

(11) **EP 4 840 293 A1**
(43) Veröffentlichungstag der Anmeldung: **18.11.2026**
(21) Anmeldenummer: 26176965.7
(22) Anmeldetag: 06.05.2026
(51) Int. Cl.: A01F 29/22, A01F 29/06

(54) **SCHLEIFEINRICHTUNG EINER LANDWIRTSCHAFTLICHEN ERNTEMASCHINE**

(30) Priorität: 14.05.2025 DE 102025118672
(71) Anmelder: Maschinenfabrik Bernard Krone GmbH & Co. KG, 48480 Spelle (DE)
(72) Erfinder: Hülsmann, Michael, 49599 Voltlage/Weese (DE)

(57) **Zusammenfassung**

Die Erfindung betrifft eine Schleifeinrichtung (2) zum Schärfen wenigstens einer, eine Schneidkante (4) aufweisenden Schneidklinge (6), die entlang eines Umfangs eines um eine Rotationsachse (8) rotierbar antreibbaren Schneidklingenträgers (10) einer landwirtschaftlichen Erntemaschine angeordnet ist. Dabei umfasst die Schleifeinrichtung (2) eine Verfahreinrichtung (12) sowie ein mittels der Verfahreinrichtung (12) verfahrbares Schleifmittel (14). Das Schleifmittel (14) ist zum Schleifen der Schneidkante (4) in einer zumindest abschnittsweise entlang der Schneidkante (4) anzuordnenden Bewegungsbahn (16) verfahrbar. Die Bewegungsbahn (16) des Schleifmittels (14) verläuft dabei bezogen auf eine mit der Schneidkante (4) in Kontakt zu bringende Schleifmittelkontaktfläche (18) des Schleifmittels (14) in wenigstens einer Betriebsstellung der Verfahreinrichtung (12) derart nichtlinear, dass das Schleifmittel (14) zum Erzeugen eines nichtlinearen Schneidkantenverlaufs (19) in wenigstens einem an einem der Enden 21 der Bewegungsbahn (16) liegenden Bewegungsbahnabschnitt (23) der Rotationsachse (8) angenähert wird. Zudem betrifft die Erfindung eine landwirtschaftliche Erntemaschine, insbesondere Häckselmaschine, mit einem rotierend antreibbaren Schneidklingenträger (10), der an seinem Umfang zumindest zwei Schneidklingen (6) aufweist, und mit einer entsprechenden Schleifeinrichtung (2).

## Beschreibung

Die Erfindung betrifft eine Schleifeinrichtung, insbesondere einen Feldhäcksler, zum Schärfen wenigstens einer, eine Schneidkante aufweisenden Schneidklinge, die entlang eines Umfangs eines um eine Rotationsaitchse rotierbar antreibbaren Schneidklingenträgers einer landwirtschaftlichen Erntemaschine angeordnet ist. Dabei umfasst die Schleifeinrichtung eine Verfahreinrichtung sowie ein mittels der Verfahreinrichtung verfahrbares Schleifmittel. Das Schleifmittel ist dabei zum Schleifen der Schneidkante in einer zumindest abschnittsweise entlang der Schneidkante anzuordnenden Bewegungsbahn verfahrbar. Weiterhin betrifft die Erfindung eine landwirtschaftliche Erntemaschine, insbesondere in Form einer Häckselmaschine, die mit einer derartigen Schleifeinrichtung ausgerüstet ist.

Bei landwirtschaftlichen Erntemaschinen der eingangs genannten Art hat der Zustand der Schneidklingen, insbesondere ihre Schärfe, Auswirkungen sowohl auf den Energiebedarf der Erntemaschine beim Erntevorgang als auch auf die Qualität des geschnittenen Ernteguts. Erntemaschinen wie Feldhäcksler nehmen Erntegut auf und zerkleinern dieses mithilfe eines horizontal, d.h. zum Untergrund zumindest annähernd parallel, rotierend angetriebenen Schneidklingenträgers, welcher umfangseitig mit insbesondere einer Vielzahl von Schneidklingen versehen ist. Ein solcher Schneidklingenträger mit Schneidklingen wird als Messertrommel oder Häckseltrommel bezeichnet. Beim Arbeitseinsatz der Erntemaschine verschleißen die Schneidklingen insbesondere an ihrer jeweiligen Schneidkante, die mit dem Erntegut in Kontakt steht und dieses schneidet, und verlieren an Schärfe.

Im Betrieb derartiger Erntemaschinen nutzen die Schneidkanten der Schneidklingen, wie auch die Schneidkanten einer Gegenschneide über ihre Länge, welche im Wesentlichen quer zur Förderrichtung orientiert ist, jedoch ungleichmäßig ab, weswegen sie Unregelmäßigkeiten in ihrem Verlauf aufweisen. Das Ausmaß des Verschleißes ist beispielsweise abhängig vom Erntegut. Insbesondere an außenseitigen Endbereichen der Schneidkanten kann aufgrund eines dort geringeren Verschleißes eine Erhebung der Schneidkante vorliegen. Dabei wird unter einer Erhebung ein relativ zur restlichen Schneidklinge in dazu senkrechter Richtung vorstehender Teil verstanden. Der dort geringere Verschleiß kann etwa daher rühren, dass eine Seitenwand eines Einzugs der Erntemaschine den Endbereich in Förderrichtung des Ernteguts überdeckt, wodurch dieser Endbereich nur im geringen Maße, ggf. auch nicht, mit Erntegut beaufschlagt wird und nicht bzw. weniger verschleißt. Die Verschleißunregelmäßigkeiten führen zu einem unregelmäßigen und damit zumindest bereichsweise unerwünscht großen Schnittspalt zwischen der Schneidkante und einer mit ihr zusammenwirkenden Gegenschneide der Erntemaschine. Wird die Gegenschneide nach dem Schleifen nachgestellt, kommt es zum Kontakt zwischen den rotierenden Schneidkanten der Schneidklingen und einem im geringeren Maße verschlissenem Außenbereich der Schneidkante der Gegenschneide, da die Schneidkanten von Schneidklingen und Gegenschneide nicht länger in einem konstanten Abstand zueinander verlaufen. Hierdurch vergrößert sich der Schnittspalt vor allem im Bereich einer Einzugsbreite der Häckseltrommel. Hierdurch kann das Erntegut schlecht bzw. teilweise nicht geschnitten und stattdessen durch den Schnittspalt gezogen werden.

Für eine zuverlässige und energiesparende Zerkleinerung des Ernteguts ist es daher notwendig, die Schneidkanten nach einer gewissen Ernteleistung zu schleifen und die Schneidklingen somit nachzuschärfen. Hierfür sind derartige landwirtschaftliche Erntemaschinen mit entsprechenden Schleifeinrichtungen der eingangs genannten Art ausgestattet. Diese ermöglichen insbesondere ein automatisiertes Nachschleifen.

Solche Schleifeinrichtungen sind beispielsweise aus der DE 10 2018 004 411 sowie der DE 10 2020 001 875 bekannt. Bei diesen Schleifeinrichtungen ist zum Schleifen der Schneidkanten jeweils ein Schleifmittel mittels einer Verfahreinrichtung entlang einer Breite des Schneidklingenträgers linear hin- und herbewegbar. Dabei ist nachteilig, dass beim Schleifen der Schneidkanten aufgrund der vorstehend erläuterten Unregelmäßigkeiten in deren Verlauf ein vergleichsweise hoher Materialabtrag erfolgt. Dies hat einen unvorteilhaften Einfluss auf die Standzeit der Schneidklingen sowie die Verlustleistung der Erntemaschine. Hieraus ergibt sich zudem eine verminderte Effizienz der Erntemaschine.

Beim Schleifen der Schneidkanten verschleißt das Schleifmittel zudem, weswegen eine durch die Schneidkanten bei Rotation gebildete imaginäre Umfangsfläche des Schneidklingenträgers kegelstumpfförmig oder fassförmig ausgebildet sein kann.

Dies ist aufgrund des dadurch entstehenden, unregelmäßigen Schnittspalts unerwünscht. Weitere bekannte Schleifeinrichtungen, wie sie etwa aus der EP 3 020 269 B1 und der US 5,103,622 A bekannt sind, begegnen dieser Problematik mit verschiedenen Lösungen, die jeweils eine möglichst zylindrische Schneidklingenträgerform und einen möglichst linearen Schneidkantenverlauf anstreben. Hiermit können jedoch nicht die vorbeschriebenen Verschleißunregelmäßigkeiten, insbesondere nicht die an außenseitigen Endbereichen der Schneidkanten entstehenden Erhebungen, vermieden werden.

Der vorliegenden Erfindung liegt daher die Aufgabe zugrunde, eine verbesserte Schleifeinrichtung der eingangs genannten Art bereitzustellen, die insbesondere mit erhöhter Wirtschaftlichkeit und Effizienz betrieben werden kann. Zudem liegt der Erfindung die Aufgabe zugrunde, eine entsprechend verbesserte Erntemaschine, insbesondere mit erhöhter Wirtschaftlichkeit und Effizienz, bereitzustellen.

Die Aufgabe wird durch eine Schleifeinrichtung gemäß Anspruch 1 sowie eine Erntemaschine nach Anspruch 14 gelöst. Vorteilhafte Ausgestaltungen der Erfindung sind den hierauf jeweils rückbezogenen Unteransprüchen, der Beschreibung sowie den

### Figuren zu entnehmen.

Bei der erfindungsgemäßen Schleifeinrichtung verläuft die Bewegungsbahn des Schleifmittels bezogen auf eine mit der Schneidkante in Kontakt zu bringende Schleifmittelkontaktfläche des Schleifmittels in wenigstens einer Betriebsstellung der Verfahreinrichtung derart nichtlinear, dass das Schleifmittel zum Erzeugen eines nichtlinearen Schneidkantenverlaufs in wenigstens einem an einem der Enden der Bewegungsbahn liegenden Bewegungsbahnabschnitt der Rotationsachse angenähert wird. Die Bewegungsbahn ist dazu an wenigstens einem ihrer Enden, insbesondere an beiden Enden, der Rotationsachse angenähert. Das Schleifmittel kann somit bezogen auf seine Schleifmittelkontaktfläche eine nichtlineare Bewegung beim Verfahren entlang der Bewegungsbahn ausführen, sodass mittels des Schleifmittels ein nichtlinearer bzw. ungerader Schneidkantenverlauf der Schneidklinge schleifbar ist. Dies hat den Vorteil, dass dem unregelmäßigen Verschleiß der Schneidkante mit dem ungeraden Schneidkantenverlauf, insbesondere dem an dem Ende bzw. den Enden des Schneidklingenträgers der Rotationsachse angenäherten Schneidkantenverlauf, entgegengewirkt werden kann. So kann in solchen Abschnitten, insbesondere Endabschnitten, der Schneidkante, in denen sich aufgrund eines geringeren Verschleißes im Betrieb der Erntemaschine eine Erhebung der Schneidkante bildet, durch eine größere Eingrifftiefe des Schleifmittels mehr weggeschliffen werden. Die darauffolgende Neubildung der Erhebung wird somit verhindert oder zumindest verringert. Im Gegensatz zum Stand der Technik wird dabei ein nichtlinearer Schneidkantenverlauf und somit eine nichtzylindrische Schneidklingenträgerform erzielt. Zudem bleibt der Schnittspalt zwischen Schneidklinge und Gegenschneide im Betrieb der Erntemaschine länger konstant. Dies hat eine erhebliche Standzeiterhöhung der Schneidklinge sowie der Gegenklinge sowie eine wesentliche Effizienzsteigerung der Schleifeinrichtung zur Folge. Insbesondere ist die Schnittqualität der Erntemaschine erheblich erhöht.

Unter der erfindungsgemäßen Bewegungsbahn wird dabei ein Verlauf des Schleifmittels, insbesondere ein Verlauf der Lage, umfassend die Position und/oder die Orientierung, der Schleifmittelkontaktfläche bei einem Verfahren entlang der Schneidkante verstanden. Maßgeblich ist dabei diejenige Bewegung des Schleifmittels bzw. derjenige Teil der Bewegungsbahn, bei der bzw. in dem im Betrieb der Schleifeinrichtung ein physischer Kontakt zwischen dem Schleifmittel und der Schneidkante besteht. Die Bewegungsbahn ist dabei insofern entlang der Schneidkante anzuordnen, als sie im Betrieb der Schleifeinrichtung entlang der Schneidkante verläuft. Insbesondere bei Schneidklingen, die sich im Betrieb der Erntemaschine entlang einer zylindrischen Fläche bewegen, verläuft die Bewegungsbahn bevorzugt zumindest anteilig in einer sich parallel zur Rotationsachse erstreckenden Richtung, insbesondere zumindest abschnittsweise parallel zur Rotationsachse des Schneidklingenträgers. Durch ihre erfindungsgemäß nichtlineare Ausbildung kann die Bewegungsbahn in wenigstens einer Betriebsstellung der Verfahreinrichtung dann zumindest abschnittsweise zur Rotationsachse angewinkelt, d.h. mit einem Winkel ungleich 180 Grad oder ungleich einem Vielfachen dessen, verlaufen. Dies ist insbesondere unabhängig von einer etwaigen, den Schneidkantenverlauf nicht beeinflussenden Zustellbewegung des Schleifmittels, welche rein zum Ausgleichen eines Verschleißes des Schleifmittels dient. Zudem wird die Zustellbewegung durchgeführt, damit auch der Verschleiß der Schneidkante des Schneidklinge ausgeglichen wird.

Der Verlauf der Bewegungsbahn ist erfindungsgemäß in wenigstens einer Betriebsstellung der Verfahreinrichtung nichtlinear. Diese Betriebsstellung kann die einzige Betriebsstellung der Verfahreinrichtung sein. Die Verfahreinrichtung kann aber auch mehrere Betriebsstellungen umfassen, indem sie insbesondere einstellbar ausgebildet ist. Erfindungsgemäß genügt es dann, wenn der Verlauf in wenigstens einer Betriebsstellung der Verfahreinrichtung nichtlinear verläuft.

Unter der Annäherung des Schleifmittels wird eine zumindest bereichsweise Verringerung eines Abstands der Schleifmittelkontaktfläche zu der Rotationsachse in dem wenigstens einen endseitigen Bewegungsbahnabschnitt verstanden. In diesem Bewegungsbahnabschnitt wird somit eine bereichsweise Annäherung des Schneidkantenverlaufs zu der Rotationsachse bewirkt.

Die dabei zum Einsatz kommende Verfahreinrichtung kann eine Führungsvorrichtung zum Führen des Schleifmittels entlang der Bewegungsbahn sowie wenigstens einen beispielsweise als Elektro-, Pneumatik- oder Hydraulikzylinder ausgebildeten Aktor zum Bewegen des Schleifmittels entlang der Führungsvorrichtung umfassen. Die Führungsvorrichtung kann insbesondere bei Schneidklingen, die sich im Betrieb der Erntemaschine entlang einer zylindrischen Fläche bewegen, zumindest abschnittsweise als Geradführung ausgebildet sein. Das Schleifmittel kann zum Verfahren entlang der Führungsvorrichtung als Teil einer mittels der Führungsvorrichtung verschieblich geführten Transporteinheit ausgebildet sein. Zum Aufnehmen des insbesondere als Schleifstein ausgebildeten Schleifmittels weist die Transporteinheit bevorzugt eine Schleifmittelaufnahme auf. Zudem umfasst die Transporteinheit insbesondere eine Zustellvorrichtung zum Zustellen des Schleifmittels in Richtung der Schneidklinge. Hiermit kann ein Kontakt zwischen Schleifmittel und Schneidklinge wiederhergestellt werden, beispielsweise wenn das Schleifmittel aufgrund vorheriger Schleifzyklen teilweise verschlissen ist. Eine insbesondere verschleißausgleichende Zustellung des Schleifmittels kann an wenigstens einem Ende, insbesondere an beiden Enden, einer Führungsbahn der Verfahreinrichtung erfolgen, an dem bzw. an denen das Schleifmittel insbesondere außer Eingriff mit den Schneidklingen steht. Dabei kann das Schleifmittel zum gleichmäßigeren Verschleiß und/oder Beibehalten einer möglichst planen Schneidmittelkontaktfläche zumindest um einen Teil einer Umdrehung um eine in Zustellrichtung verlaufende Zustellachse rotiert werden.

In einer bevorzugten Ausgestaltung der Schleifeinrichtung ist das Schleifmittel zur Ausbildung der nichtlinearen Bewegungsbahn bezogen auf eine Hauptverfahrrichtung des Schleifmittels winkelveränderlich gelagert. Bevorzugt ist eine das Schleifmittel umfassende Transporteinheit bezogen auf eine Hauptverfahrrichtung winkelveränderlich gelagert. Dabei ist das Schleifmittel bzw. die Transporteinheit insbesondere derart winkelveränderlich gelagert, dass durch Verschwenken des Schleifmittels bzw. der Transporteinheit ein Winkel zwischen der Schleifmittelkontaktfläche und der zur Rotationsachse insbesondere parallelen Hauptverfahrrichtung verändert wird. Der Winkel kann insbesondere im Betrieb des Schleifmittels, also bei Verfahren entlang der Bewegungsbahn verändert werden. Unter der Hauptverfahrrichtung wird diejenige Richtung verstanden, in die das Schleifmittel zum Schleifen eines linearen Schneidkantenverlaufs verläuft bzw. verlaufen würde. Somit kann ein Schleifwinkel zwischen der Schleifmittelkontaktfläche und der Schneidkante verändert werden, welcher wiederum einen nichtlinearen Schneidklingenverlauf ermöglicht. Dies ist auf einfache Weise umsetzbar, indem das Schleifmittel bzw. die Transporteinheit bevorzugt schwenkbeweglich an einem mittels der Verfahreinrichtung verfahrbaren Schlitten gelagert ist. Zum Verschwenken des Schleifmittels bzw. der Transporteinheit relativ zu der Verfahreinrichtung bzw. dem Schlitten kann wenigstens ein beispielsweise als Elektro-, Pneumatik- oder Hydraulikzylinder ausgebildeter Aktor vorgesehen sein. Bei dieser Ausgestaltung ist vorteilhaft, dass eine konstruktiv vergleichsweise einfache, geradlinige Führungsvorrichtung der Verfahreinrichtung zum Einsatz kommen kann.

Alternativ oder ergänzend bildet in einer weiteren bevorzugten Ausgestaltung der Schleifeinrichtung die Verfahreinrichtung zur Ausbildung der nichtlinearen Bewegungsbahn in wenigstens einer Betriebsstellung der Verfahreinrichtung eine nichtlineare Führungsbahn aus, wobei die Führungsbahn an wenigstens einem ihrer Enden der Rotationsachse angenähert verläuft. Hierzu weist die Verfahreinrichtung vorzugsweise die vorbeschriebene Führungsvorrichtung auf. Die Führungsbahn beschreibt insbesondere diejenige Bahn, entlang der das Schleifmittel mittels der Verfahreinrichtung bzw. deren Führungsvorrichtung zum Schleifen der Schneidklinge geführt wird. Dabei kann das Schleifmittel auch mittelbar als Teil der Transporteinheit geführt sein. Das Schleifmittel bzw. die Transporteinheit können bei dieser Ausgestaltung winkelunveränderlich gelagert sein, wodurch sich deren Lagerung relativ einfach gestaltet.

Eine nichtlineare Führungsbahn kann auf konstruktiv einfache Weise umgesetzt werden, indem die Führungsbahn der Verfahreinrichtung vorzugsweise wenigstens einen ersten und wenigstens einen weiteren Führungsbahnabschnitt umfasst. Bei dem ersten Führungsbahnabschnitt handelt es sich bevorzugt um den mittigen, d.h. den parallel zur Rotationsachse zumindest die Mitte des Schneidklingenträgers überspannenden, Abschnitt. Der wenigstens eine weitere Führungsbahnabschnitt liegt an einem jeweiligen Ende der Führungsbahn. Dabei bildet der weitere Führungsbahnabschnitt in zumindest einer Betriebsstellung der Verfahreinrichtung keine lineare Verlängerung des ersten Führungsbahnabschnitts. Der weitere Führungsbahnabschnitt kann zwar eine Verlängerung des ersten Führungsabschnitts ausbilden, jedoch ist diese dann in der wenigstens einen Betriebsstellung nicht linear. Hierdurch weist der weitere Führungsbahnabschnitt in der Betriebsstellung der Verfahreinrichtung mit nichtlinearer Bewegungsbahn relativ zum ersten Führungsbahnabschnitt einen zur Rotationsachse des Schneidklingenträgers veränderten, insbesondere verringerten, Abstand auf. Der weitere Führungsbahnabschnitt kann relativ zum ersten Führungsbahnabschnitt quer zur Hauptverfahrrichtung versetzt angeordnet sein. Dabei ist der erste Führungsbahnabschnitt vorzugsweise in Hauptverfahrrichtung des Schleifmittels und insbesondere parallel zu einem ersten Kantenabschnitt der Schneidkante und/oder parallel zur Rotationsachse verlaufend anzuordnen. Der weitere Führungsbahnabschnitt ist bevorzugt unmittelbar auf den ersten Führungsbahnabschnitt folgend angeordnet. Der weitere Führungsbahnabschnitt bildet dann insbesondere eine in wenigstens einer Betriebsstellung der Verfahreinrichtung nichtlineare Fortsetzung des ersten Führungsbahnabschnitts.

In der Praxis hat sich gezeigt, dass insbesondere an den in zur Rotationsachse paralleler Richtung liegenden Enden der Schneidklingen unerwünschte Erhebungen im Schneidklingenverlauf entstehen können. Diesen kann entgegengewirkt werden, indem die Führungsbahn bevorzugt wenigstens zwei weitere Führungsbahnabschnitte umfasst, wobei die weiteren Führungsbahnabschnitte an jeweiligen, insbesondere in parallel zur Rotationsachse liegender Richtung angeordneten, Enden der Führungsbahn angeordnet sind.

In einer bevorzugten Ausführungsform der Schleifeinrichtung beträgt ein Anteil aller weiteren Führungsbahnabschnitte relativ zu allen ersten Führungsbahnabschnitten in zunehmend bevorzugter Reihenfolge weniger als 35 %, 30 %, 25 % oder 20 % einer Gesamtlänge der Führungsbahn. Dabei kann auch jeweils nur ein einzelner erster und/oder weiterer Führungsbahnabschnitt vorliegen. Dies ist vorteilhaft, um den Unregelmäßigkeiten im Schneidkantenverlauf entgegenzuwirken, die oftmals nur einen kleinen, höchstens ebenso großen Anteil an der Schneidkantenlänge ausmachen.

In einer weiteren bevorzugten Ausführungsform ist der erste Führungsbahnabschnitt durch ein insbesondere als Geradführung ausgebildetes erstes Führungselement der Verfahreinrichtung ausgebildet und der weitere Führungsbahnabschnitt ist durch ein relativ zu dem ersten Führungselement beweglich, insbesondere schwenkbeweglich, angeordnetes weiteres Führungselement der Verfahreinrichtung ausgebildet. Im Falle mehrerer weiterer Führungsbahnabschnitte ist vorzugsweise jeder weitere Führungsbahnabschnitt durch jeweils ein weiteres Führungselement ausgebildet. Dies ist auf besonders einfache Weise umsetzbar, indem das weitere Führungselement bzw. die weiteren Führungselemente beweglich, insbesondere schwenkbeweglich, an dem ersten Führungselement gehalten sind. Hiermit wird auf konstruktiv einfache Weise die Grundlage für einen veränderlichen Verlauf der Führungsbahn geschaffen.

Ein Übergang der Führungsbahn von dem ersten Führungselement zu dem weiteren Führungselement oder umgekehrt kann besonders fließend gestaltet werden, indem wenigstens eines der Führungselemente selbst, insbesondere das weitere Führungselement, einen nichtlinearen Führungsbahnabschnitt ausbildet. So kann dieser Führungsbahnabschnitt z.B. zumindest abschnittsweise rampenförmig und/oder bogenförmig ausgebildet sein.

Da die Schleifeinrichtung im Betrieb der Erntemaschine üblicherweise nicht dauerhaft in Betrieb ist, ist es vorteilhaft, wenn das Schleifmittel mittels der Verfahreinrichtung in eine Ruheposition, in der es außer Kontakt zu der Schneidklinge steht, verfahrbar ist. Hierfür umfasst die Verfahreinrichtung vorzugsweise wenigstens zwei weitere Führungselemente, wobei eines der weiteren Führungselemente relativ zu dem anderen der weiteren Führungselemente eine in eine zur Rotationsachse insbesondere parallele Hauptverfahrrichtung des Schleifmittels größere Erstreckung aufweist. Das weitere Führungselement mit größerer Erstreckung bildet also einen größeren Anteil der Führungsbahn mit aus als das andere weitere Führungselement mit geringerer Erstreckung. Somit steht ein durch dieses weitere Führungselement ausgebildeter, größerer, weiterer Führungsbahnabschnitt zur Verfügung, in dem zumindest abschnittsweise das Schleifmittel außer Eingriff mit der Schneidklinge stehen kann. Gleichzeitig kann die Führungsbahn hinsichtlich ihrer Länge möglichst effizient und materialsparend ausgestaltet sein.

In einer bevorzugten Ausgestaltung der Erfindung weist die Verfahreinrichtung eine Einstelleinheit auf, mit der das weitere Führungselement hinsichtlich seines Einflusses auf die Bewegungsbahn des Schleifmittels einstellbar ist. Insbesondere ist durch die Einstelleinheit ein Abstand und/oder Winkel des weiteren Führungsbahnabschnitts zu einer zur Rotationsachse insbesondere parallelen Hauptverfahrrichtung des Schleifmittels einstellbar. So kann durch Verstellen des weiteren Führungselements über die Einstelleinheit die Führungsbahn des Schleifmittels und dadurch dessen Eingrifftiefe in die Schneidkante eingestellt werden. Dies kann auf konstruktiv einfache Weise umgesetzt werden, indem die Einstelleinheit ein etwa als Stellschraube oder dergleichen ausgebildetes Einstellmittel umfasst, welches sowohl mit dem ersten Führungselement als auch mit dem weiteren Führungselement wirkverbunden ist. Das Einstellmittel ist dabei vorzugsweise mit wenigstens einem der Führungselemente beweglich verbunden, sodass bei Bewegung des Einstellmittels ein Abstand und/oder ein Winkel des weiteren Führungselements relativ zu wenigstens einem Teil des ersten Führungselements verändert werden kann. Die Änderung der Führungsbahn bewirkt wiederum eine Änderung der Bewegungsbahn des entlang dieser Führungsbahn geführten Schleifmittels. Die Bewegungsbahn des Schleifmittels, insbesondere von dessen Schleifmittelkontaktfläche, bestimmt den Schneidkantenverlauf.

In einer weiteren bevorzugten Ausgestaltung der Erfindung ist das weitere Führungselement zwischen einer inaktiven Stellung ohne Einfluss auf die Bewegungsbahn und einer aktiven Stellung mit Einfluss auf die Bewegungsbahn einstellbar. Unter der inaktiven Stellung wird dabei eine Stellung des weiteren Führungselements bzw. der weiteren Führungselemente verstanden, in der das Führungselement keinen Kontakt zu dem zu führenden Schleifmittel hat oder trotz Kontakt keinen Einfluss auf die Führungsbahn und somit keinen Einfluss auf die Bewegungsbahn hat. Die Führungsbahn des Schleifmittels kann dann ausschließlich durch das erste Führungselement und dessen ersten Führungsbahnabschnitt bestimmt werden. Hierzu können sich der erste Führungsbahnabschnitt und der weitere Führungsbahnabschnitt in Hauptverfahrrichtung überlappen. Die Bewegungsbahn kann bei inaktiver Stellung des weiteren Führungselements somit linear verlaufen. Unter der aktiven Stellung wird demgegenüber eine Stellung des weiteren Führungselements bzw. der weiteren Führungselemente verstanden, in der das weitere Führungselement zumindest mittelbaren Kontakt zu dem Schleifmittel hat und dessen Führungsbahn und damit auch Bewegungsbahn hin zu einer nichtlinearen Bewegungsbahn beeinflusst. Zur präzisen und variablen, etwa vom Erntegut oder Erntebedingungen abhängigen Einstellung der Bewegungsbahn kann das weitere Führungselement dabei insbesondere auch Zwischenstellungen zwischen der inaktiven Stellung und der aktiven Stellung mit maximaler Eingrifftiefe in die Schneidklinge einnehmen.

Die Eingrifftiefe des Schleifmittels in die Schneidklinge kann mittels der Einstelleinheit in zunehmend bevorzugter Reihenfolge in einem Bereich von 0 Millimeter bis 10 Millimeter, 0 Millimeter bis 5 Millimeter, 0 Millimeter bis 4 Millimeter, 0 Millimeter bis 3 Millimeter oder 0 Millimeter bis 2 Millimeter eingestellt werden. Als Eingrifftiefe wird insbesondere die Abweichung von einem linearen Schneidkantenverlauf in zur Rotationsachse senkrechter Richtung verstanden.

Zur Erhöhung der Betriebssicherheit der Schleifeinrichtung verfügt die Verfahreinrichtung bevorzugt über wenigstens einen Endanschlag für wenigstens eine der Stellungen des weiteren Führungselements. Vorzugsweise ist je ein Endanschlag für sowohl die inaktive als auch die aktive Stellung mit maximaler Eingrifftiefe des weiteren Führungselements bzw. der weiteren Führungselemente vorgesehen. Dies kann auf besonders einfache Weise umgesetzt sein, indem wenigstens eines der ersten oder weiteren Führungselemente einen als Endanschlag fungierenden Vorsprung und das jeweils andere Führungselement einen diesen Vorsprung an wenigstens einer Seite, insbesondere an zwei voneinander weg gerichteten Seiten des Vorsprungs, umgebenden Anlagebereich aufweist. Der Anlagebereich kann als Ausnehmung des Führungselements ausgebildet sein.

Zur Ausbildung eines einstellbaren weiteren Führungselements ist dieses weitere Führungselement in quer zur Hauptverfahrrichtung liegender Richtung vorzugsweise verstellbar gelagert. Dazu kann das weitere Führungselement relativ zum ersten Führungselement verschwenkbar und/oder verschieblich gelagert sein. Somit kann der Abstand des weiteren Führungselements zur Rotationsachse eingestellt werden. Zudem ist die Eingrifftiefe des weiteren Führungselements in quer zur Rotationsachse liegender Richtung relativ zur Schneidklinge einstellbar.

Alternativ oder ergänzend kann das weitere Führungselement in eine parallel zur Hauptverfahrrichtung liegende Richtung verstellbar gelagert sein. Dazu kann das weitere Führungselement in diese Richtung an dem ersten Führungselement oder an einem anderen Teil der Verfahreinrichtung verstellbar gelagert, insbesondere verschieblich geführt, sein. Somit kann das weitere Führungselement in insbesondere auch parallel zur Rotationsachse liegender Richtung relativ zum ersten Führungselement verstellt werden und ein Maß des Einflusses des Schleifmittels auf die Schneidklinge in parallel zur Rotationsachse liegender Richtung eingestellt werden. Hierdurch kann der Anteil nichtlinearer Schneidkantenabschnitte an der Schneidkantenlänge verändert werden. Die Schleifeinrichtung ist somit besonders variabel einstellbar und nutzbar.

In einer bevorzugten Ausgestaltung der Schleifeinrichtung ist das insbesondere als Teil einer Transporteinheit ausgebildete Schleifmittel zumindest mittelbar federnd mit der Verfahreinrichtung verbunden. Vorzugsweise ist das Schleifmittel in einer quer zur Hauptverfahrrichtung und insbesondere auch quer zur Rotationsachse liegenden Richtung, insbesondere über Transportelemente der Transporteinheit, federnd mit der Verfahreinrichtung verbunden. Dazu kann wenigstens ein erstes insbesondere als Transportrolle ausgebildetes Transportelement der Transporteinheit mit wenigstens einem weiteren insbesondere als Transportrolle ausgebildeten Transportelement der Transporteinheit federnd verbunden sein. Eines dieser ersten oder weiteren Transportelemente kann mit der Verfahreinrichtung in quer zur Hauptverfahrrichtung liegender Richtung unbeweglich verbunden sein, während das andere der ersten oder weiteren Transportelemente mit dem Schleifmittel in quer zur Hauptverfahrrichtung liegender Richtung unbeweglich verbunden ist. Diese Transportelemente können dazu auf unterschiedlichen Seiten einer Führungsvorrichtung der Verfahreinrichtung angeordnet sein. Folglich kann das Schleifmittel über die Transportelemente eine gefederte Bewegung quer zur Hauptverfahrrichtung ausführen. Dies ist vorteilhaft, um dem Schleifmittel in diese Richtung eine Bewegungsfreiheit zu ermöglichen, mit der es entlang einer nichtlinearen Bewegungsbahn, also zumindest anteilig in quer zur Hauptverfahrrichtung liegender Richtung, verfahren kann. Zugleich wird durch die gefederte Halterung sichergestellt, dass das Schleifmittel in einem insbesondere zur Rotationsache parallelen ersten Führungsabschnitt wieder seinen ursprünglichen Abstand zur Verfahreinrichtung einnimmt. An dieser Ausführungsform ist vorteilhaft, dass eine Relativbewegung von Schleifmittel zu Verfahreinrichtung, insbesondere über eine Relativbewegung der Transportelemente zueinander, ermöglicht wird und die Führung somit einfacher, insbesondere nur auf einer Seite nichtlinear, ausgestaltet werden kann.

Die beanspruchte landwirtschaftliche Erntemaschine, insbesondere Häckselmaschine, weist einen rotierend antreibbaren Schneidklingenträger auf, der an seinem Umfang zumindest zwei, insbesondere eine Vielzahl von Schneidklingen umfasst.

Erfindungsgemäß ist die Erntemaschine durch eine der vor- oder nachbeschriebenen Ausführungsformen der Schleifeinrichtung gekennzeichnet, mit den bereits erläuterten Vorteilen.

Weitere Vorteile und Einzelheiten der Erfindung ergeben sich aus den in den Figuren schematisch dargestellten Ausführungsformen, die im Folgenden beschrieben sind. Sofern sinnvoll sind gleichwirkende Elemente der Erfindung mit gleichen Bezugsziffern versehen. Die vor- und nachbeschriebenen Merkmale können auch zu weiteren Ausführungsformen zusammengesetzt werden. Es zeigen auf schematische Weise:
- Fig. 1: eine perspektivische Ansicht einer erfindungsgemäßen Schleifeinrichtung an einem mit Schneidklingen ausgerüsteten Schneidklingenträger,
- Fig. 2: eine Vorderansicht aus Richtung II auf den Gegenstand aus Fig. 1,
- Fig. 3: eine Seitenansicht aus Richtung III auf den Gegenstand aus Fig. 2,
- Fig. 4: eine Vergrößerung des Details IV aus Fig. 3,
- Fig. 5: eine Schnittansicht in Richtung V-V durch die Schleifeinrichtung aus Fig. 3,
- Fig. 6: eine Rückansicht aus Richtung VI auf den Gegenstand aus Fig. 1,
- Fig. 7: eine Vergrößerung des Details VII aus Fig. 6 und
- Fig. 8: eine Vorderansicht des Gegenstands aus Fig. 1-7 mit in inaktiver Stellung befindlichen weiteren Führungselementen.

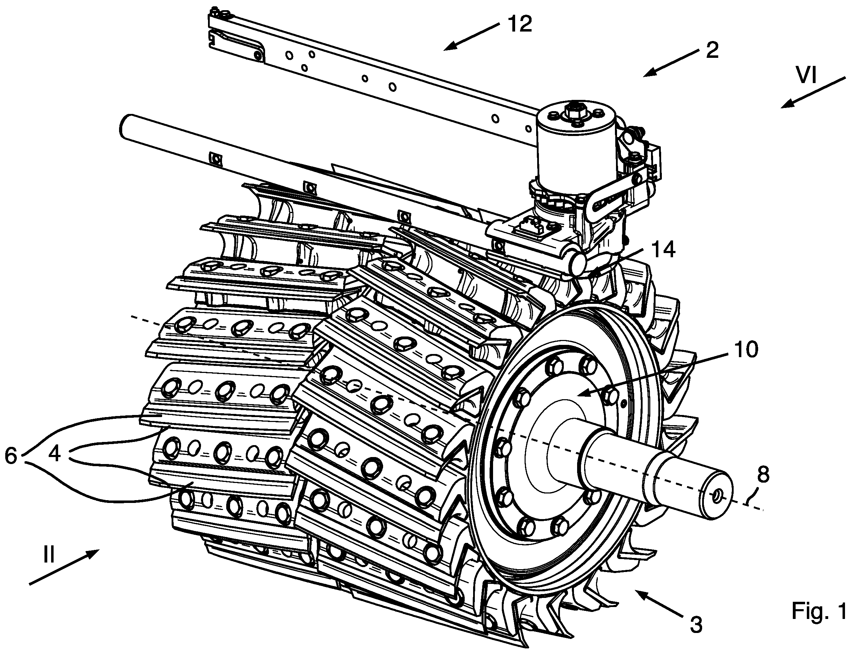

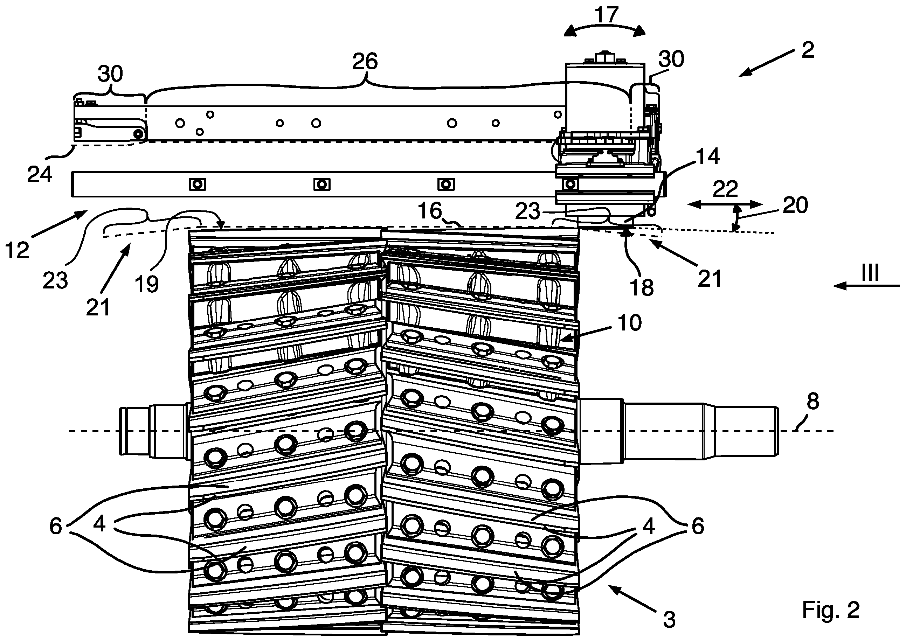

Fig. 1 und 2 zeigen eine Ausführungsform einer erfindungsgemäßen Schleifeinrichtung 2 für eine landwirtschaftliche Erntemaschine. Darin ist die Schleifeinrichtung 2 an einer bezogen auf ihren Umfang im Betrieb hier zumindest annähernd zylinderförmigen Häckseltrommel 3 der Erntemaschine angeordnet. Die Schleifeinrichtung 2 dient dem Schärfen einer Schneidkante 4 wenigstens einer Schneidklinge 6, die entlang eines Umfangs eines um eine Rotationsachse 8 rotierbar angetriebenen, hier trommelförmigen, Schneidklingenträgers 10 verläuft. Die Schleifeinrichtung 2 hat eine Verfahreinrichtung 12 sowie ein mittels der Verfahreinrichtung 12 verfahrbares Schleifmittel 14. Dabei ist das Schleifmittel 14 zum Schleifen der Schneidkanten 4 in einer zumindest abschnittsweise entlang der Schneidkanten 4 angeordneten Bewegungsbahn 16 (vgl. Fig. 2) verfahrbar. Die Bewegungsbahn 16 des Schleifmittels 14 verläuft bezogen auf eine mit der Schneidkante 4 zum Schleifen dieser in Kontakt stehende Schleifmittelkontaktfläche 18 des Schleifmittels 14 in wenigstens einer möglichen Betriebsstellung der Verfahreinrichtung 12 derart nichtlinear, dass das Schleifmittel 14 zum Erzeugen eines nichtlinearen Schneidkantenverlaufs 19 vorliegend an beiden Enden 21 der Bewegungsbahn 16 liegenden Bewegungsbahnabschnitten 23 der Rotationsachse 8 angenähert wird (vgl. Fig. 2). Wie in Fig. 2 dargestellt, fällt die Bewegungsbahn 16 bei der vorliegenden Ausführungsform an ihren jeweiligen Enden zur Rotationsachse 8 ab, nähert sich also abschnittsweise der Rotationsachse 8. Zur Verdeutlichung dieses Verlaufs sind die abfallenden Enden der Bewegungsbahn 16 vorliegend verstärkt abfallend dargestellt. Das tatsächliche Maß des Abfalls ist geringer als dargestellt und liegt hier bei insbesondere 1,5 Millimetern, kann jedoch auch größer oder kleiner als 1,5 Millimeter sein. Mit der dargestellten Schleifeinrichtung 2 kann ein nichtlinearer Schneidkantenverlauf 19 und somit eine nichtzylindrische Schneidklingenträgerform erzeugt werden. Damit kann im Betrieb der Erntemaschine entstehenden unerwünschten Unregelmäßigkeiten, hier Erhebungen in den Endabschnitten, des Schneidkantenverlaufs 19 entgegengewirkt und ein Entstehen solcher Unregelmäßigkeiten präventiv verhindert werden.

Die nichtlineare Bewegungsbahn 16 ist vorliegend derart umgesetzt, dass die in Fig. 2 gezeigte Verfahreinrichtung 12 in wenigstens einer Betriebsstellung der Verfahreinrichtung 12 eine nichtlineare Führungsbahn 24 ausbildet, die hier an beiden ihrer Enden der Rotationsachse 8 angenähert verläuft. Die Führungsbahn 24 ist zur Verdeutlichung ihrer Nichtlinearität (mittels der gestrichelten Linie 24) ebenfalls verstärkt nichtlinear dargestellt. Diejenige Betriebsstellung der Verfahreinrichtung 12, in der die Führungsbahn 24 nichtlinear ist, ist in Fig. 1 bis 7 gezeigt. Alternativ oder ergänzend zur Ausbildung der nichtlinearen Bewegungsbahn 16 mittels der nichtlinearen Führungsbahn 24 kann, wie schematisch durch eine Schwenkrichtung 17 in Fig. 2 angedeutet, eine winkelveränderliche Lagerung des Schleifmittels 14 bezogen auf eine Hauptverfahrrichtung 22, insbesondere einen Winkel 20 zwischen der Schleifmittelkontaktfläche 18 und der zur Rotationsachse 8 insbesondere parallelen Hauptverfahrrichtung 22, des Schleifmittels 14 vorgesehen sein.

Wie Fig. 2 weiterhin zeigt, umfasst die Führungsbahn 24 vorliegend wenigstens einen ersten Führungsbahnabschnitt 26 sowie wenigstens einen, in zumindest einer Betriebsstellung der Verfahreinrichtung 12 eine nichtlineare Verlängerung des ersten Führungsbahnabschnitts 26 bildenden weiteren Führungsbahnabschnitt 30. Somit kann durch in unterschiedlichen Ebenen bzw. mit unterschiedlichem Abstand zur Rotationsachse 8 anzuordnende bzw. angeordnete Führungsbahnabschnitte 26, 30 auf einfache Weise eine nichtlineare Führungsbahn 24 erzeugt werden.

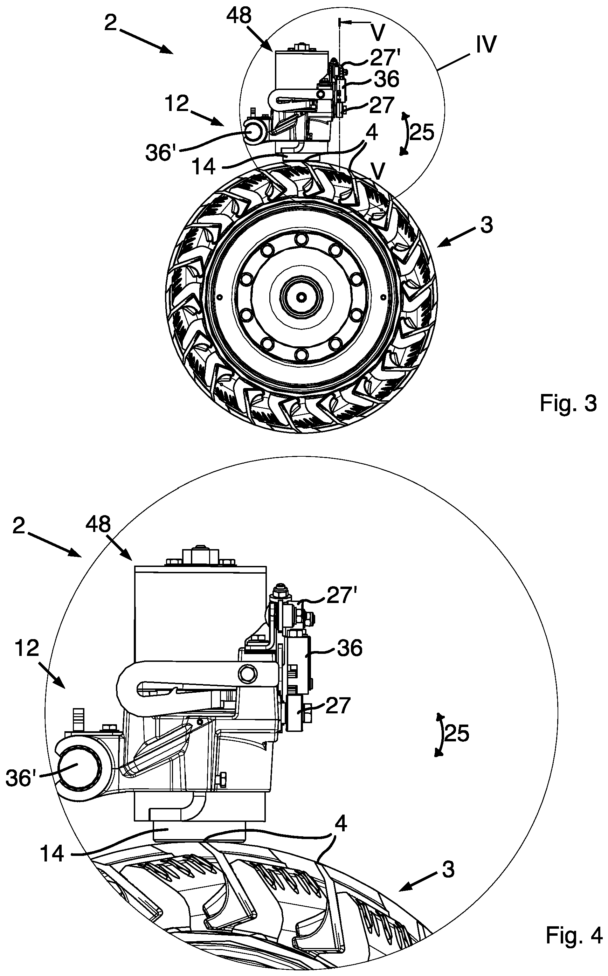

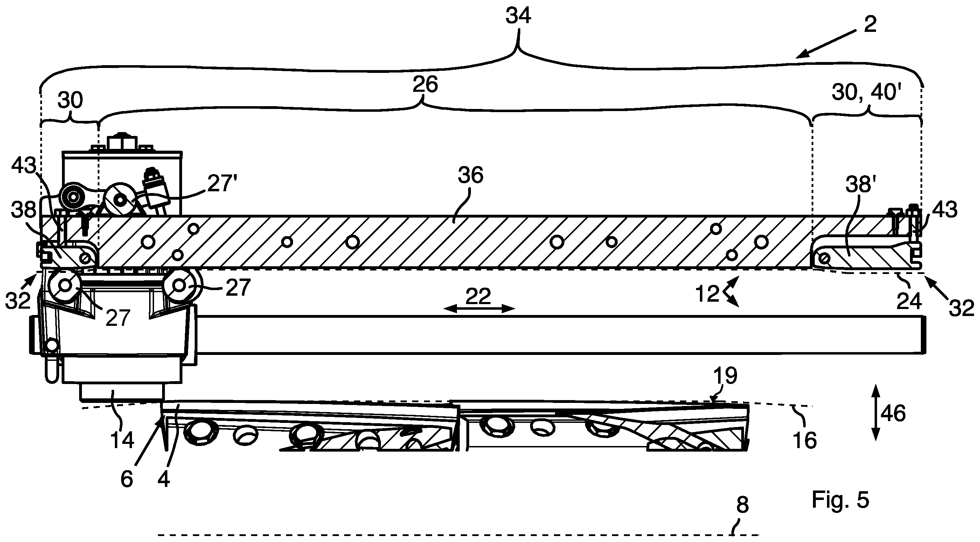

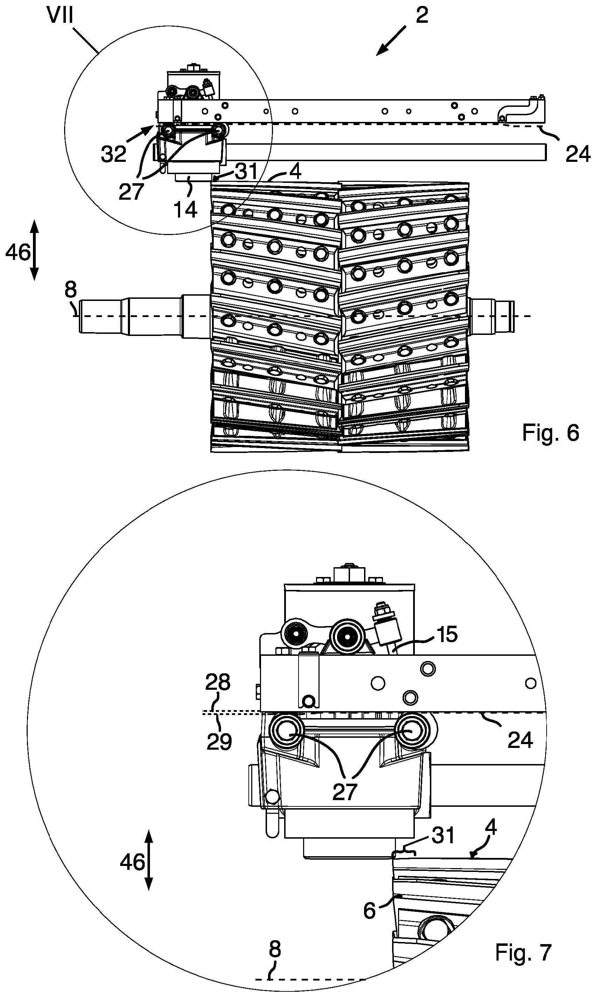

Fig. 3 und 4 zeigen die Schleifeinrichtung 2 in einer Seitenansicht. Hieraus ist erkennbar, dass das Schleifmittel 14 hier an einer Oberseite der Häckseltrommel 3 angeordnet ist. Zum Hin- und herbewegen des Schleifmittels 14 entlang der Schneidkanten 4 der Häckseltrommel 3 dient die Verfahreinrichtung 12. Diese umfasst vorliegend ein als Rollenführungsbahn ausgebildetes erstes Führungselement 36 sowie ein weiteres, hier als Wellenführung ausgebildetes erstes Führungselement 36'. Das Schleifmittel 14 ist, vorliegend als Teil einer Transporteinheit 48, zwischen diesen Führungselementen 36, 36' angeordnet und mittels beider geführt. Das Schleifmittel 14 kann zum Ausgleichen eines Verschleißes des Schleifmittels 14 über eine Zustelleinrichtung der Transporteinheit 48 in Richtung 46 (vgl. Fig. 5) zur Rotationsachse 8 hin zugestellt werden. Es kann zum nichtlinearen Verfahren entlang der Schneidkanten 4 zumindest in einem weiteren Führungsbahnabschnitt 30 um das erste Führungselement 36' verschwenkt werden. Um diese Schwenkbewegung in Schwenkrichtung 25 zu ermöglichen, ist das Schleifmittel 14 hier zumindest mittelbar, nämlich über als Transportrollen ausgebildete Transportelemente 27, 27' beweglich, insbesondere federnd, mit dem ersten Führungselement 36 der Verfahreinrichtung 12 verbunden. Dazu sind hier wenigstens zwei der Transportelemente 27, 27', insbesondere auf unterschiedlichen Seiten des ersten Führungselements 36 angeordnete Transportelemente 27, 27', über ein Federelement 15 (vgl. Fig. 7) relativbeweglich, insbesondere gefedert, miteinander verbunden.

Fig. 5 zeigt eine Schnittansicht der Schleifeinrichtung 2 mit einer senkrecht durch das erste Führungselement 36 verlaufenden Schnittebene. Die Führungsbahn 24 umfasst hier zwei weitere Führungsbahnabschnitte 30, die in jeweiligen Endbereichen an den Enden 32 der Führungsbahn 24 liegen. Der Anteil aller weiteren Führungsbahnabschnitte 30 beträgt vorliegend relativ zu allen ersten Führungsbahnabschnitten 26 weniger als 20 % der Führungsbahnlänge 34, kann jedoch auch größer oder kleiner sein. Hier kann somit derjenige Bereich der Bewegungsbahn 16, in dem das Schleifmittel 14 von einer linearen Bewegungsbahn 16 abweicht, gezielt geringgehalten und an den Enden 32 vorgesehen werden, um dort den an den Enden der Schneidkante 4 erfahrungsgemäß entstehenden Erhebungen entgegenzuwirken.

Dabei ist der erste Führungsbahnabschnitt 26 vorliegend linear ausgebildet, insbesondere durch ein als Geradführung bzw. Linearführung ausgebildetes erstes Führungselement 36 der Verfahreinrichtung 12. Die weiteren Führungsbahnabschnitte 30 sind jeweils durch ein relativ zu dem ersten Führungselement 36 beweglich, hier schwenkbeweglich, und vorliegend daran angeordnetes weiteres Führungselement 38 der Verfahreinrichtung 12 ausgebildet. Zudem hat die Verfahreinrichtung 12 hier ein zweites weiteres Führungselement 38'. Die weiteren Führungselemente 38, 38' sind in quer zur Hauptverfahrrichtung 22 liegender Richtung 46 verstellbar, vorliegend schwenkbar, gelagert. Somit kann deren Eingrifftiefe in die Schneidklinge 6 in diese Richtung 46 verstellt werden. Vorliegend weist das in Fig. 5 rechte, weitere Führungselement 38' relativ zu dem anderen, hier linken, weiteren Führungselement 38 eine in eine zur Rotationsachse 8 insbesondere parallele Hauptverfahrrichtung 22 des Schleifmittels 14 größere Erstreckung 40' auf. Das Schleifmittel 14 kann somit auch in aktiver Stellung des rechten, weiteren Führungselements 38' bei Verfahren an das diesem Führungselement 38' zugeordneten Ende 32 eine Ruheposition einnehmen, in der es außer Eingriff mit der Schneidklinge 6 steht. Dabei kommt es nicht darauf an, welches der weiteren Führungselemente 38, 38' das rechte oder das linke ist.

Die weiteren Führungselemente 38, 38' sind vorliegend quer zur Hauptverfahrrichtung 22 in das erste Führungselement 36 eingelassen (vgl. Fig. 4). Das erste Führungselement 36 weist dazu entsprechende Ausnehmungen zur Aufnahme der weiteren Führungselemente 38, 38' auf. Somit ist die Verfahreinrichtung 12 besonders kompakt ausgebildet.

Fig. 6 und 7 zeigen das Schleifmittel 14 in hier am linken Ende 32 der Führungsbahn 24 befindlicher Position. Das weitere Führungselement 38 (vgl. Fig. 5) befindet sich hier in aktiver Stellung, in der es die Führungsbahn 24 der daran geführten Transportelemente 27 beeinflusst, also mitbestimmt. Hier werden die in Fig. 7 unteren Transportelemente 27 durch das weitere Führungselement 38 mit einem zur Rotationsachse 8 um vorliegend insbesondere 1,5 Millimeter geringeren Abstand geführt.

Dies ist in Fig. 7 durch den hier 1,5 Millimeter näher an der Rotationsachse 8 liegenden weiteren Führungsbahnabschnitt 30 (Linie 29) relativ zu dem ersten Führungsbahnabschnitt 26 (Linie 28) verdeutlicht. Somit entsteht vorliegend beim Schleifen der Schneidklinge 6 eine als Fase 31 ausgebildete Ausnehmung der Schneidkante 4 mit einer Erstreckung von ebenfalls insbesondere 1,5 Millimetern in quer zur Rotationsachse 8 liegender Richtung 46.

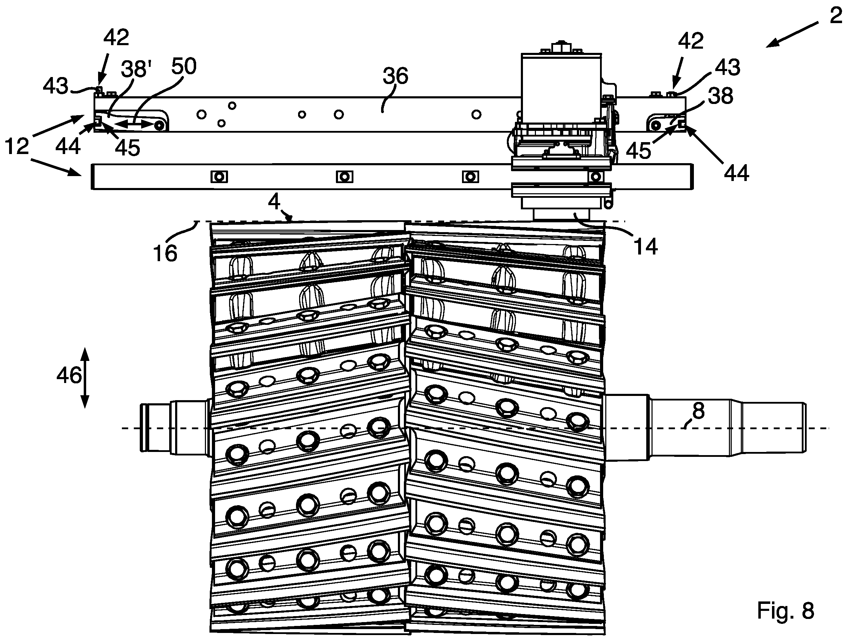

Fig. 8 zeigt die Schleifeinrichtung 2 mit in inaktiver Stellung befindlichen weiteren Führungselementen 38, 38'. Die Verfahreinrichtung 12 hat hier zwei Einstelleinheiten 42, mit denen hier die jeweiligen weiteren Führungselemente 38, 38' hinsichtlich verschiedener Abschnitte der Bewegungsbahn 16 des Schleifmittels 14 einstellbar sind. In der hier vorliegenden inaktiven Stellung ist ein jeweiliges als Stellschraube ausgebildetes Einstellmittel 43 (vgl. Fig. 5) der jeweiligen Einstelleinheit 42 in eine inaktive Position, hier nach oben, verstellt. Somit kann das jeweilige weitere Führungselement 38, 38' bei Verfahren des Schleifmittels 14 entlang diesem vorliegend nach oben ausweichen und beeinflusst die Bewegungsbahn 16 des Schleifmittels 14 daher nicht. Daher kann in dieser Stellung ein linearer Verlauf der Schneidkante 4 geschliffen werden, und die Schleifeinrichtung 2 ist besonders variabel einsetzbar.

Mittels der jeweiligen Einstelleinheit 42 sind die weiteren Führungselemente 38, 38' hier zwischen einer inaktiven Stellung ohne Einfluss auf die Bewegungsbahn 16, welche in Fig. 8 als obere Stellung dargestellt ist, und einer aktiven Stellung mit Einfluss auf die Bewegungsbahn 16, welche in Fig. 5 als untere Stellung dargestellt ist, einstellbar. Somit können auch Ausnehmungen, wie etwa Fasen, der Schneidkante 4 mit anderer Eingrifftiefe als 1,5 Millimetern, und insbesondere auch jeder Zwischenwert zwischen 0 Millimetern und der maximalen Eingrifftiefe, erzeugt werden. Zudem weist die Verfahreinrichtung 12, hier deren erstes Führungselement 36, jeweils einen Endanschlag 44 für hier beide Endstellungen der weiteren Führungselemente 38, 38' auf. Der Endanschlag 44 ist vorliegend jeweils als Vorsprung ausgebildet, welcher in eine Ausnehmung 45 des jeweiligen weiteren Führungselements 38, 38' greift und somit die Schwenkbewegung des weiteren Führungselements 38, 38' in Richtung 46 begrenzt. Wie schematisch durch eine Verstellrichtung 50 angedeutet ist, kann wenigstens eines, insbesondere beide der weiteren Führungselemente 38, 38' in die parallel zur Hauptverfahrrichtung 22 liegende Verstellrichtung 50 verstellbar gelagert sein. Hierzu kann dieses bzw. können diese beispielweise in diese Richtung 50 verschieblich geführt und feststellbar ausgebildet sein.

## Patentansprüche

1. Schleifeinrichtung (2) zum Schärfen wenigstens einer, eine Schneidkante (4) aufweisenden Schneidklinge (6), die entlang eines Umfangs eines um eine Rotationsachse (8) rotierbar antreibbaren Schneidklingenträgers (10) einer landwirtschaftlichen Erntemaschine angeordnet ist, wobei die Schleifeinrichtung (2) eine Verfahreinrichtung (12) sowie ein mittels der Verfahreinrichtung (12) verfahrbares Schleifmittel (14) umfasst, und wobei das Schleifmittel (14) zum Schleifen der Schneidkante (4) in einer zumindest abschnittsweise entlang der Schneidkante (4) anzuordnenden Bewegungsbahn (16) verfahrbar ist, **dadurch gekennzeichnet, dass** die Bewegungsbahn (16) des Schleifmittels (14) bezogen auf eine mit der Schneidkante (4) in Kontakt zu bringende Schleifmittelkontaktfläche (18) des Schleifmittels (14) in wenigstens einer Betriebsstellung der Verfahreinrichtung (12) derart nichtlinear verläuft, dass das Schleifmittel (14) zum Erzeugen eines nichtlinearen Schneidkantenverlaufs (19) in wenigstens einem an einem der Enden (21) der Bewegungsbahn (16) liegenden Bewegungsbahnabschnitt (23) der Rotationsachse (8) angenähert wird.

2. Schleifeinrichtung (2) nach Anspruch 1, **dadurch gekennzeichnet, dass** das Schleifmittel (14) zur Ausbildung der nichtlinearen Bewegungsbahn (16) bezogen auf eine Hauptverfahrrichtung (22) des Schleifmittels (14) winkelveränderlich gelagert ist.

3. Schleifeinrichtung (2) nach einem der vorhergehenden Ansprüche, **dadurch gekennzeichnet, dass** die Verfahreinrichtung (12) zur Ausbildung der nichtlinearen Bewegungsbahn (16) in wenigstens einer Betriebsstellung der Verfahreinrichtung (12) eine nichtlineare Führungsbahn (24) ausbildet, die an wenigstens einem ihrer Enden der Rotationsachse (8) angenähert verläuft.

4. Schleifeinrichtung (2) nach einem der vorhergehenden Ansprüche, **dadurch gekennzeichnet, dass** die Verfahreinrichtung (12) eine Führungsbahn (24) ausbildet, die wenigstens einen, insbesondere mittigen, zur Rotationsachse (8) parallel verlaufenden, ersten Führungsbahnabschnitt (26) sowie wenigstens einen, in wenigstens einer Betriebsstellung der Verfahreinrichtung (12) eine nichtlineare Verlängerung des ersten Führungsbahnabschnitts (26) bildenden und insbesondere an einem jeweiligen Ende (32) der Führungsbahn (24) angeordneten, weiteren Führungsbahnabschnitt (30) umfasst.

5. Schleifeinrichtung (2) nach Anspruch 4, **dadurch gekennzeichnet, dass** ein Anteil aller weiteren Führungsbahnabschnitte (30) relativ zu allen ersten Führungsbahnabschnitten (26) in zunehmend bevorzugter Reihenfolge weniger als 35 %, 30 %, 25 % oder 20 % einer Führungsbahnlänge (34) beträgt.

6. Schleifeinrichtung (2) nach einem der vorhergehenden Ansprüche, **dadurch gekennzeichnet, dass** die Verfahreinrichtung (12) eine Führungsbahn (24) ausbildet, wobei ein erster Führungsbahnabschnitt (26) durch ein insbesondere als Geradführung ausgebildetes erstes Führungselement (36) der Verfahreinrichtung (12) ausgebildet ist und wobei ein weiterer Führungsbahnabschnitt (30) durch ein relativ zu dem ersten Führungselement (36) beweglich, insbesondere schwenkbeweglich, angeordnetes weiteres Führungselement (38) der Verfahreinrichtung (12) ausgebildet ist.

7. Schleifeinrichtung (2) nach Anspruch 6, **dadurch gekennzeichnet, dass** die Verfahreinrichtung (12) wenigstens zwei weitere Führungselemente (38) umfasst, wobei eines der weiteren Führungselemente (38') relativ zu dem anderen der weiteren Führungselemente (38) eine in eine zur Rotationsachse (8) insbesondere parallele Hauptverfahrrichtung (22) des Schleifmittels (14) größere Erstreckung (40') aufweist.

8. Schleifeinrichtung (2) nach einem der Ansprüche 6 oder 7, **dadurch gekennzeichnet, dass** die Verfahreinrichtung (12) eine Einstelleinheit (42) aufweist, mit der das weitere Führungselement (38, 38') hinsichtlich seines Einflusses auf die Bewegungsbahn (16) des Schleifmittels (14) einstellbar ist.

9. Schleifeinrichtung (2) nach einem der Ansprüche 6 bis 8, **dadurch gekennzeichnet, dass** das weitere Führungselement (38, 38') zwischen einer inaktiven Stellung ohne Einfluss auf die Bewegungsbahn (16) und einer aktiven Stellung mit Einfluss auf die Bewegungsbahn (16) einstellbar ist.

10. Schleifeinrichtung (2) nach einem der Ansprüche 6 bis 9, **dadurch gekennzeichnet, dass** die Verfahreinrichtung (12) wenigstens einen Endanschlag (44) für wenigstens eine der Stellungen des weiteren Führungselements (38, 38') aufweist.

11. Schleifeinrichtung (2) nach einem der Ansprüche 6 bis 10, **dadurch gekennzeichnet, dass** das weitere Führungselement (38, 38') in quer zur Hauptverfahrrichtung (22) liegender Richtung (46) verstellbar gelagert ist.

12. Schleifeinrichtung (2) nach einem der Ansprüche 6 bis 11, **dadurch gekennzeichnet, dass** das weitere Führungselement (38, 38') in eine parallel zur Hauptverfahrrichtung (22) liegende Richtung verstellbar gelagert ist.

13. Schleifeinrichtung (2) nach einem der vorherigen Ansprüche, **dadurch gekennzeichnet, dass** das insbesondere als Teil einer Transporteinheit (48) ausgebildete Schleifmittel (14) zumindest mittelbar federnd mit der Verfahreinrichtung (12) verbunden ist.

14. Landwirtschaftliche Erntemaschine, insbesondere Häckselmaschine, mit einem rotierend antreibbaren Schneidklingenträger (10), der an seinem Umfang zumindest zwei Schneidklingen (6) aufweist, **dadurch gekennzeichnet, dass** die Erntemaschine eine Schleifeinrichtung (2) gemäß einem der Ansprüche 1 bis 13 aufweist.
